# EUROPÄISCHE PATENTSCHRIFT

(11) **EP 1 748 377 B1**
(45) Veröffentlichungstag und Bekanntmachung des Hinweises auf die Patenterteilung: **19.12.2007**
(21) Anmeldenummer: 05016417.7
(22) Anmeldetag: 28.07.2005
(51) Int. Cl.: G06K 7/10, G06K 19/00

(54) **Verfahren und Vorrichtung zum automatisierten Erfassen einer auf einem quaderförmigen Stückgut aufgebrachten Identifikation**
Procedure and apparatus for the automatic acquisition of an ID located on an item of cuboid format
Procédé et appareil pour l'aquisition automatique d'une identification sur une petite marchandise d'une forme parallélépipède rectangle

(43) Veröffentlichungstag der Anmeldung: 31.01.2007
(73) Patentinhaber: Rowa Automatisierungssysteme GmbH & Co. KG, 53539 Kelberg (DE)
(72) Erfinder: Hellenbrand, Christoph, 56761 Kaifenheim (DE)
(74) Vertreter: Schmidt, Frank-Michael

(56) Entgegenhaltungen:
- EP-A- 0 036 769
- EP-A- 0 118 730
- EP-A- 0 886 233
- DE-A1- 19 944 818

## Beschreibung

Die Erfindung betrifft ein verfahren zum automatisierten Erfassen einer auf einem quaderförmigen Stückgut, insbesondere auf einer Arzneimittelpackung, aufgebrachten optisch erfaßbaren Identifikation, beispielsweise eines Strichcodes. Ferner betrifft die Erfindung eine Vorrichtung zum automatisierten Erfassen einer auf einem quaderförmigen Stückgut, insbesondere auf einer Arzneimittelpackung, aufgebrachten optisch erfaßbaren Identifikation, mit einem drehbaren Auflageteller mit einer Auflageebene zur Aufnahme des Stückguts während des Erfassens, wobei der Auflageteller mit einem Drehantrieb gekoppelt ist, einer Fördervorrichtung zum Fördern eines einzelnen Stückguts in eine Anfangsposition auf dem drehbaren Auflageteller, einer optischen Leseeinrichtung, die derart angeordnet ist, daß sie eine Identifikation erfassen kann, die auf wenigstens einer der Leseeinrichtung zugewandten, zur Auflageebene senkrechten Seitenfläche eines auf der Auflageebene aufliegenden Stückguts aufgebracht ist, und einer mit dem Drehantrieb und der Fördereinrichtung gekoppelten Steuereinrichtung.

Eine Vorrichtung der eingangs genannten Art ist beispielsweise aus der Patentschrift DE 199 44 818 C2 bekannt. Die dort beschriebene Scan-Station zur automatisierten Erfassung von auf Gegenständen angebrachten, maschinenlesbaren optischen Kennzeichnungen weist eine waagerechte Aufnahmeplattform und mehrere Scannerköpfe auf. Die Scannerköpfe sind räumlich verteilt um die Aufnahmeplattform herum angeordnet und auf die Aufnahmeplattform gerichtet. Die Aufnahmeplattform ist als ebener Drehteller aus einem glasklaren Material ausgebildet, der in seiner Ebene drehbar gelagert und mit einem motorischen Drehantrieb versehen ist. Jeweils wenigstens ein Scannerkopf ist von oben und von unten in Richtung der Drehachse des Drehtellers, das heißt unter bzw. über dem Drehteller, angebracht. Wenigstens ein weiterer Scannerkopf ist seitlich quer zum Drehteller angebracht. Die beschriebene Scan-Station gestattet mit Hilfe von drei Scannerköpfen die_Erfassung einer beliebig auf einer der sechs Seitenflächen des quaderförmigen Gegenstands aufgebrachten maschinenlesbaren Kennzeichnung, wobei maximal eine Drehung von 3 x 90° und jeweils ein Kippen der Abtastebene des seitlichen Scannerkopfs erforderlich ist. Wenn bei der bekannten Vorrichtung zwei einander gegenüberliegende seitliche Scannerköpfe verwendet werden, die zueinander senkrechte Abtastrichtungen aufweisen, so gestattet die bekannte Scan-Station mit Hilfe von vier Scannerköpfen die sichere Erfassung eines Strichcodes nach einer Drehung von maximal 270° (3 x 90°). Nachteilig bei der bekannten Vorrichtung ist die relativ hohe Anzahl der erforderlichen Scannerköpfe und die Verwendung der glasklaren Auflage, die zum Freihalten des Sichtfelds des unter der Auflage angeordneten Scanners einen Antrieb am Außenrand erfordert, und die damit verbundenen Kosten der Scan-Station.

Aufgabe der Erfindung ist es, eine preiswerte Vorrichtung zum optischen Erfassen einer maschinenlesbaren Identifikation auf quaderförmigen Stückgütern zur Verfügung zu stellen.

Diese Aufgabe wird erfindungsgemäß durch ein Verfahren mit den Merkmalen des Anspruchs 1 bzw. eine Vorrichtung mit den Merkmalen des Anspruchs 13 gelöst.

Bei dem erfindungsgemäßen Verfahren zum automatisierten Erfassen einer auf einem quaderförmigen Stückgut, insbesondere einer Arzneimittelpackung, aufgebrachte optisch erfaßbaren Identifikation (beispielsweise eines Strichcodes) wird zunächst jeweils ein einzelnes Stückgut von einer Fördervorrichtung in eine Anfangsposition auf einer Auflageebene einer drehbaren Auflage befördert. Damit jeweils ein einzelnes Stückgut befördert werden kann, ist der Fördervorrichtung vorzugsweise eine Vereinzelungsvorrichtung vorgeschaltet, beispielsweise eine Vereinzelungsvorrichtung, wie sie in der Patentanmeldung EP 04 025 777.6 beschrieben ist. Die Fördervorrichtung umfaßt vorzugsweise verschiedene Vorrichtungen, die das einzelne Stückgut auf der Auflage in eine gewünschte Position und Orientierung bringen können. Anschließend wird eine optische Leseeinrichtung zum Abtasten wenigstens einer ihr zugewandten Seitenfläche veranlaßt. Die optische Leseeinrichtung ist derart angeordnet, daß sie eine Identifikation erfassen kann, die auf wenigstens einer der Leseeinrichtung zugewandten, zur Auflageebene senkrechten Seitenfläche des auf der Auflageebene aufliegenden Stückguts aufgebracht ist. Die optische Leseeinrichtung kann beispielsweise so ausgebildet sein, daß sie jeweils eine Seitenfläche abtastet. Alternativ kann die optische Leseeinrichtung so ausgebildet sein, daß sie gleichzeitig mehrere Seitenflächen abtastet. Zu diesem Zweck kann sie beispielsweise mehrere optische Sensoren und/oder Spiegel umfassen. Nach dem Schritt des Abtastens wird festgestellt, ob bei dem Abtasten eine Identifikation erfaßt worden ist (das heißt, ob eine Identifikation auf der abgetasteten einen Seitenfläche oder beispielsweise auf zwei abgetasteten Seitenflächen erfaßt worden ist). Wenn von der optischen Leseeinrichtung bei dem Abtasten keine Identifikation erfaßt worden ist, wird die Auflage derart gedreht, daß wenigstens eine nächste senkrecht angeordnete Seitenfläche der optischen Leseeinrichtung zugewandt wird, und es wird die Leseeinrichtung erneut zum Abtasten der wenigstens einen nächsten Seitenfläche veranlaßt. Die Schritte des Abtastens durch die Leseeinrichtung, des Feststellens, ob eine Identifikation erfaßt worden ist, und des Drehens der Auflage werden solange wiederholt, bis eine Identifikation erfaßt worden ist oder sämtliche vier Seitenflächen von der optischen Leseeinrichtung vollständig abgetastet worden sind. Dadurch wird erreicht, daß der zeitaufwendige Drehschritt nur solange wie erforderlich ausgeführt wird. Lediglich für den Fall, daß nach Abschluß der vollständigen Abtastung sämtlicher Seitenflächen noch immer keine Identifikation erfaßt worden ist, wird das auf der Auflage aufliegende Stückgut von einer Greifeinrichtung ergriffen und um etwa 90° um eine zur Auflageebene parallele Achse gedreht und derart orientiert, daß die optische Leseeinrichtung eine auf einer zuvor noch nicht abgetasteten Fläche des Stückguts aufgebrachte Identifikation erfassen kann. Dann werden die Schritte des Abtastens und Feststellens, ob eine Identifikation erfaßt worden ist, wiederholt. Wenn dabei festgestellt wird, daß keine Identifikation erfaßt worden ist, wird das Stückgut um etwa 180° (entweder in der Auflageebene oder um die zur Auflageebene parallele Achse) gedreht, so daß die optische Leseeinrichtung eine auf der verbleibenden Fläche aufgebrachte Identifikation erfassen kann. Dann werden die Schritte des Abtastens und Feststellens wiederholt.

Das erfindungsgemäße Verfahren erfordert keinen durchsichtigen Auflageteller und darüber hinaus lediglich eine optische Leseeinrichtung, die eine auf einer ihr zugewandten Seitenfläche aufgebrachte Identifikation in beliebiger Orientierung erfassen kann oder eine optische Leseeinrichtung, die aus zwei optischen Teilleseeinrichtungen besteht, die jeweils Identifikationen erfassen können, die in verschiedener Orientierung aufgebracht sind. Der Verfahrensablauf ist zudem so gewählt, daß die Identifikation bereits mit hoher Wahrscheinlichkeit erfaßt werden kann, ohne daß ein Ergreifen und Drehen des Stückguts über der Auflage erforderlich ist.

Bei einer Ausführungsform wird das Stückgut nach dem Ergreifen durch die Greifeinrichtung und dem Drehen um etwa 90° wieder auf der Auflage abgelegt, wobei die Auflage das Stückgut ggf. um etwa 180° in der Auflageebene weiterdreht. Bei einer alternativen Ausführungsform wird das Stückgut von der Greifeinrichtung erst um etwa 90° und danach ggf. nochmals um etwa 180° (entweder weiter oder zurück) gedreht.

Bei einer Ausführungsform könnte die optische Leseeinrichtung ständig aktiv sein und die ihr jeweils zugewandten Seitenflächen abtasten, während die Auflage kontinuierlich weitergedreht wird. Bei einer bevorzugen Ausführungsform jedoch steht die Auflage während des Abtastens der Seitenflächen still und wird jeweils um 90° weiter gedreht, wenn während des Abtastens noch keine Identifikation erfaßt worden ist.

Bei einer bevorzugten Ausführungsform ist die aufgebrachte Identifikation eine von einem scanner, der in einer vorgegebenen Abtastrichtung abtastet, erfaßbare Identifikation. Beispielsweise ist die Identifikation eine auf dem Stückgut aufgebrachte Strichcode-Identifikation, wobei der Strichcode im wesentlichen parallel zu einer Kante des Stückguts ausgerichtet ist. Für jede Seitenfläche gibt es in diesem Fall zwei mögliche Orientierungen des zu erfassenden Strichcodes. Bei dieser Ausführungsform wird vorzugsweise ein Scannerkopf verwendet, der in nur einer Abtastrichtung abtasten kann. Dies verringert die Kosten. In Weiterbildung dieser Ausführungsform ist es denkbar, daß der Scannerkopf eine ihm zugewandte Seitenfläche zunächst in einer ersten Scanrichtung abtastet und - sofern noch kein Strichcode erfaßt worden ist - dann in einer zweiten Scanrichtung abtastet. Dazu wird der Scannerkopf um 90° gedreht oder gekippt. Bei einer bevorzugten Ausführungsform werden jedoch zwei feststehende Scannerköpfe verwendet, die vorzugsweise auf einander gegenüberliegende Seitenflächen des Stückguts gerichtet sind. Ein Scannerkopf tastet dabei in einer ersten Richtung, beispielsweise in einer zur Auflageebene senkrechten Richtung ab, und ein zweiter Scannerkopf tastet in einer zur ersten Richtung senkrechten zweiten Richtung ab, das heißt beispielsweise in einer zur Auflageebene parallelen Richtung. Wenn bei dieser Ausführungsform die Auflage dreimal um jeweils 90° gedreht wird, so hat jeder der beiden Scannerköpfe die Möglichkeit, jede der vier senkrechten Seitenflächen des Stückguts abzutasten. Dies erlaubt die Erfassung sowohl eines senkrecht als auch eines waagerecht angeordneten Strichcodes auf jeder der vier Seitenflächen des Stückguts. Bei einer bevorzugten Ausführungsform des erfindungsgemäßen Verfahrens wird das Stückgut vor Beginn der Abtastung in eine mittige Anfangsposition auf der Auflage gefördert. Die Zentrierung des Stückguts auf der Auflage verbessert die Positionierung gegenüber den feststehenden optischen Leseeinrichtungen, beispielsweise den beiden Scannern.

Bei einer bevorzugten Weiterbildung des erfindungsgemäßen Verfahrens wird dann, wenn nach dem Abtasten sämtlicher Seitenflächen noch keine Identifikation erfaßt worden ist, das Stückgut zunächst ergriffen, anschließend die Auflage nach unten abgesenkt und danach das Stückgut um 90° gedreht und dann die Auflage wieder angehoben. Dies gestattet die Verwendung einer Greifeinrichtung, die nicht nach oben oder unten bewegt zu werden braucht.

Die erfindungsgemäße Vorrichtung zum automatisierten Erfassen einer auf einer quaderförmigen Stückgut, insbesondere auf einer Arzneimittelpackung, aufgebrachten optisch erfaßbaren Identifikation weist einen drehbaren Auflageteller mit einer Auflageebene zur Aufnahme des Stückguts während des Erfassens auf, wobei der Auflageteller mit einem Drehantrieb gekoppelt ist. Ferner ist eine Fördervorrichtung zum Fördern eines einzelnen Stückguts in eine Anfangsposition auf dem drehbaren Auflageteller vorgesehen. Eine optische Leseeinrichtung ist derart angeordnet, daß sie eine Identifikation erfassen kann, die auf wenigstens einer der Leseeinrichtung zugewandten, zur Auflageebene senkrechten Seitenfläche eines auf der Auflageebene aufliegenden Stückguts aufgebracht ist. Über dem Auflageteller ist eine Greifeinrichtung angeordnet, die das Stückgut ergreifen und um eine zur Auflageebene parallele Achse drehen kann. Eine Steuereinrichtung ist mit der Fördervorrichtung, dem Drehantrieb des Auflagetellers, der optischen Leseeinrichtung und der Greifeinrichtung gekoppelt und so ausgebildet, daß nach dem Fördern des Stückguts in die Anfangsposition die optische Leseeinrichtung aktiviert und der Auflageteller solange gedreht wird, bis entweder die optische Leseeinrichtung eine Identifikation erfaßt hat oder bis der Auflageteller soweit gedreht worden ist, daß sämtliche zur Auflageebene senkrechten Seitenflächen des Stückguts von der optischen Leseeinrichtung abgetastet worden sind, ohne eine Identifikation zu erfassen. In dem zuletzt genannten Fall veranlaßt die Steuereinrichtung die Greifeinrichtung, das Stückgut zu greifen und um etwa 90° um eine zur Auflageebene parallele Achse zu drehen und derart zu orientieren, daß die optische Leseeinrichtung eine auf einer zuvor noch nicht abgetasteten Fläche des Stückguts aufgebrachte Identifikation erfassen kann.

Die erfindungsgemäße Vorrichtung kommt ohne einen durchsichtigen Auflageteller aus und erfordert nur wenig Aufwand für die optische Leseeinrichtung. Die optische Leseeinrichtung braucht lediglich die Identifikation auf wenigstens einer senkrechten Seitenflächen erfassen zu können. Die erfindungsgemäße Vorrichtung eignet sich gleichzeitig zum orientieren des Stückguts derart, daß ein Greifer eines Bediengeräts das Stückgut in der gewünschten Orientierung greifen kann, um es in einer gewünschten Orientierung auf einem Regalboden ablegen zu können.

Vorzugsweise kann die optische Leseeinrichtung einen auf dem Stückgut aufgebrachten Strichcode erfassen und weist einen Scannerkopf mit einer vorgegebenen Scanrichtung auf. Vorzugsweise ist ein erster Scannerkopf mit einer zur Auflageebene parallelen Scanrichtung und ein zweiter Scannerkopf mit einer zur Auflageebene senkrechten Scanrichtung vorgesehen. Dies ist besonders preiswert, da die Vorrichtung mit nur zwei ortsfesten Scannerköpfen auskommt. Die Scannerköpfe sind vorzugsweise so angeordnet, daß sie einander gegenüberliegende Seitenflächen des Stückguts abtasten.

Bei einer bevorzugten Ausführungsform der Vorrichtung weist der Auflageteller eine zur Drehachse konzentrische kreisförmige Begrenzung auf und ist in eine entsprechende Ausnehmung einer dem Auflageteller umgebenden Auflagefläche aufgenommen. Der drehbare Auflageteller ist vorzugsweise nach unten unter die Auflagefläche absenkbar. Dies ermöglicht eine Greifeinrichtung, die lediglich seitlich an das Stückgut angreift und nicht nach oben oder unten bewegt zu werden braucht. Bei einer alternativen Ausführungsform kann die Greifeinrichtung das ergriffene Stückgut anheben, ohne daß der Auflageteller abgesenkt zu werden braucht.

Bei einer bevorzugten Ausführungsform weist die Fördervorrichtung zwei in geringem Abstand über den Auflageteller in dessen radialer Richtung geführte parallele Schiebebacken auf, deren Breite den Durchmesser des Drehtellers übersteigt und die derart von außen zur Mitte des Auflageteller zusammenfahrbar sind, daß ein auf dem Auflageteller aufliegendes Stückgut in der Bewegungsrichtung der Schiebebacken auf dem Auflageteller zentriert wird. Dadurch wird eine gut definierte Anfangsposition und eine definierte Anfangsorientierung des Stückguts erreicht, was die Erfassung durch die optische Leseeinrichtung erleichtert. Beispielsweise sind die Anforderungen an die Tiefenschärfe der optischen Leseeinrichtung reduziert, da nur noch die unterschiedlichen Ausdehnungen der Packungen, nicht aber deren unterschiedliche Position auf dem Drehteller berücksichtigt zu werden brauchen. Darüber hinaus gestattet die Verwendung der parallelen Schiebebacken zur Positionierung des Stückguts auf dem Auflageteller gleichzeitig eine Bestimmung oder Überprüfung der Abmessung des Stückguts in der Bewegungsrichtung der Schiebebacken. Wird beispielsweise diese Positionierung mit Hilfe der Schiebebacken zweimal hintereinander durchgeführt und das Stückgut zwischen den beiden Malen durch Drehung des Auflagetellers um 90° gedreht, so ist eine Bestimmung der Abmessungen der Auflagefläche realisierbar; wenn die Schiebebacken mit einem Sensor zur Erfassung ihrer Position bzw. ihres Abstands gekoppelt sind. Bei einer bevorzugten Ausführungsform umfaßt die Fördervorrichtung ferner einen rechtwinklig zu den parallelen Schiebebacken angeordneten Schieber, der über den Auflageteller hinweg von außen radial zur Mitte des Auflagetellers bewegt werden kann und der sich über die Breite des Auflagetellers erstreckt. Bei dieser Ausführungsform ist es beispielsweise denkbar, daß das Stückgut zunächst am Rand des Auflagetellers abgelegt wird (beispielsweise dorthin von der Vereinzelungsvorrichtung transportiert wird). Anschließend wird das Stückgut mit Hilfe des Schiebers und der sich dazu senkrecht bewegenden schiebebacken in die Mitte des Auflagetellers in eine vorgegebene Orientierung geschoben.

Vorteilhafte und/oder bevorzugte Weiterbildungen der Erfindung sind in den Unteransprüchen gekennzeichnet.

Im folgenden wird die Erfindung anhand eines in der Zeichnung dargestellten bevorzugten Ausführungsbeispiels näher beschrieben. In der Zeichnung zeigen:
Fig. 1A eine schematische Draufsicht auf eine Identifikations-, Vermessungs- und Positioniervorrichtung für Arzneimittelpackungen, die das erfindungsgemäße Verfahren ausführen kann und die erfindungsgemäße Vorrichtung zum automatisierten Erfassen einer auf der Arzneimittelpackung aufgebrachten Identifikation umfaßt;
Fig. 1B eine schematische Seitenansicht der in Figur 1A dargestellten Vorrichtung; und
Fig. 2A bis 2L schematische Draufsichten und Seitenansichten der in den Figuren 1A und 1B dargestellten Vorrichtung während verschiedener Phasen der Identifikation, Vermessung und Positionierung einer Arzneimittelpackung.

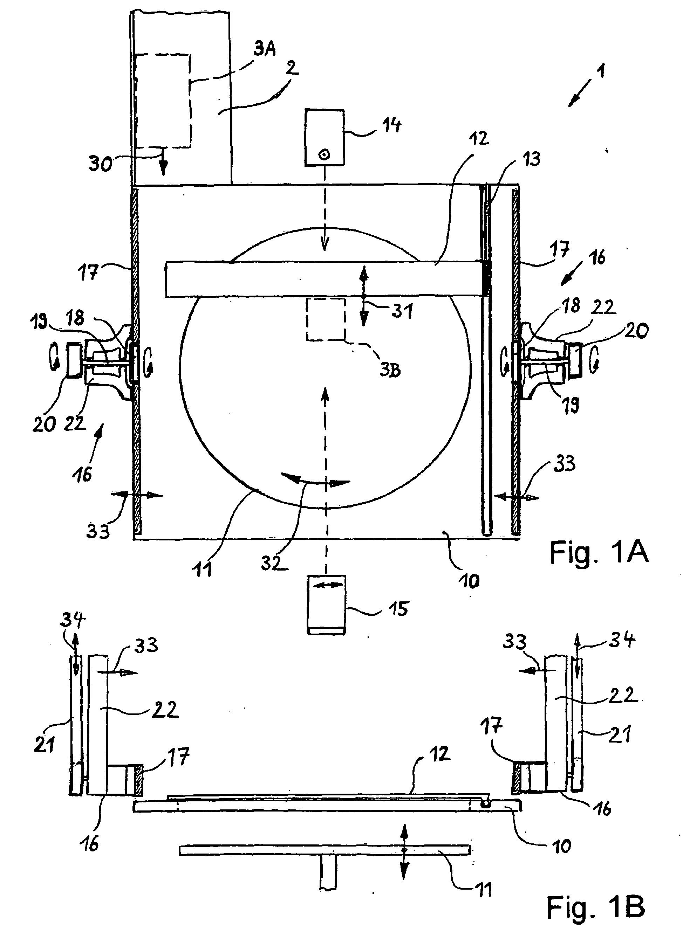

Die in den Figuren 1A und 1B schematisch dargestellte Vorrichtung 1 dient der automatisierten Erfassung einer auf einem quaderförmigen Stückgut, insbesondere einer Arzneimittelpackung 3, aufgebrachten optisch erfaßbaren Identifikation (d.h. dem Identifizieren) und darüber hinaus der Erfassung der drei Abmessungen einer solchen Arzneimittelpackung 3 (d.h. dem Vermessen) sowie dem Bereitsrellen der Arzneimittelpackung 3 an einer vorgegebenen Position in einer von den drei Abmessungen der Arzneimittelpackung 3 abhängigen Orientierung derart, daß die Arzneimittelpackung an der vorgegebenen Position von einem Greifer eines Bediengeräts aufgenommen und in der gewünschten Orientierung auf einem Regalboden eines automatisierten Regallagers oder in einen Schacht eines Schachtsystems des Lagers abgelegt werden kann (die letzte Funktion wird im folgenden als Positionieren bezeichnet). Die in den Figuren 1A und 1B schematisch dargestellte Identifikations-, Vermessungs- und Positioniervorrichtung 1 schließt sich vorzugsweise an eine vorgeschaltete Vereinzelungsvorrichtung an, die eine bestimmte Menge einzulagernder Arzneimittelpackungen unterschiedlicher Größe und Gestalt aufnimmt und einzeln über eine Fördereinrichtung 2, die in Figur 1A oben links dargestellt ist, der Identifikations-, Vermessungs- und Positioniervorrichtung 1 zuführt. Die Fördereinrichtung 2, beispielsweise ein Förderband oder eine Rutsche, transportiert die Arzneimittelpackung 3A in die mit dem Pfeil 30 gekennzeichnete Richtung, so daß die Arzneimittelpackung schließlich auf einem Auflagetisch 10 der Vorrichtung 1 landet.

Bei der in Figur 1A dargestellten bevorzugten Ausführungsform weist der Auflagetisch 10 eine ebene Oberfläche auf, über welche in geringem Abstand sowohl ein Schieber 12 in einer ersten Richtung als auch zwei Zentrierbacken 17 in einer dazu senkrechten zweiten Richtung bewegt werden können. Sowohl der Schieber 12 als auch die Zentrierbacken 17 sind so ausgebildet und geführt, daß sie eine Arzneimittelpackung in dem zu erwartenden Größenspektrum auf der Oberfläche des Auflagetischs 10 in den beiden zueinander senkrechten Richtungen verschieben können, ohne daß die Arzneimittelpackung 3 dabei gekippt oder beschädigt wird. In der Mitte des Auflagetischs 10 ist ein Drehteller 11 angeordnet, mit dessen Hilfe eine darauf aufliegende Arzneimittelpackung 3 in der Auflageebene des Auflagetischs 10 gedreht werden kann. Mit Hilfe des Schiebers 12, der Zentrierbacken 17 und des Drehtellers 11 kann die Arzneimittelpackung 3 in eine gewünschte Position auf der Auflageebene des Auflagetischs 10 gebracht werden.

Der Schieber 12 dient insbesondere dazu, die in einem Eckenbereich des Auflagetischs 10 von der Fördereinrichtung 2 her eintreffende Arzneimittelpackung 3 in eine mehr mittig angeordnete Position zu verschieben. Die Zentrierbacken 17, welche symmetrisch zu einem Mittelpunkt des Auflagetellers 11 geführt und bewegt werden können, dienen dazu, die Arzneimittelpackung 3 in der Mitte des Drehtellers 11 zu zentrieren. Gleichzeitig sind die Zentrierbacken mit einem deren Bewegung erfassenden Sensor derart gekoppelt, daß mit ihrer Hilfe der Abstand zwischen den Innenflächen der Zentrierbacken 17 und somit eine Abmessung der zwischen ihnen zentrierten Arzneimittelpackung 3 bestimmt (gemessen) werden kann. Die Zentrierbacken 17 können dabei bis auf die Außenabmessungen der Arzneimittelpackung 3 zusammengefahren werden, ohne daß eine Klemmkraft erzeugt wird. Sie können aber auch soweit zusammengefahren werden, daß sie eine gewisse Andruckkraft auf die Außenwandung der Arzneimittelpackung ausüben. Die Zentrierbacken 17 sind Bestandteil einer Zentrier- und Greifvorrichtung 16. Die Zentrier- und Greifvorrichtung umfaßt neben den Zentrierbacken 17, die sich über die gesamte Ausdehnung des Auflagetischs 10 erstrecken, zusätzlich zwei Greifbacken 18, die jeweils in der Mitte der Zentrierbacken 17 derart ausgebildet sind, daß die nach innen weisenden Oberflächen der Greifbacken 18 entweder in einer Ebene mit der nach innen weisenden Oberfläche der Zentrierbacken 17 liegen oder geringfügig über diese hinausragen, so daß sie an die Oberfläche der Arzneimittelpackung 3 angedrückt werden können. Darüber hinaus sind die Greifbacken 18 über in jeweiligen Halterungen 22 gelagerten Drehachsen 19 mit Zahnrädern 20 verbunden, die über zugehörige Zahnriemen 21 antreibbar sind. Die Halterungen 22 sind mit einem die Zentrier- und Greifvorrichtung 16 radial zum Drehteller bewegenden Antriebseinrichtung und die Zahnriemen 21 mit einer weiteren Antriebseinrichtung derart gekoppelt, daß die Zentrier- und Greifvorrichtung nicht nur in der Lage ist, die Arzneimittelpackung 3 auf dem Auflagetisch 10 zu verschieben, sondern auch in der Lage ist, die Arzneimittelpackung zwischen den Greifbacken 18 festzuklemmen und durch Drehen der Greifbacken 18 um eine zur Oberfläche des Auflagetischs 10 parallele Achse zu drehen. Um eine solche Drehung einer zwischen den Greifbacken 18 eingeklemmten Arzneimittelpackung zu ermöglichen, ist es vorgesehen, daß der Drehteller 11 mit einem Antrieb zum Absenken und Anheben gekoppelt ist. Sowohl der Antrieb zum Absenken des Drehtellers 11 als auch die Antriebe zum Bewegen des Schiebers 12, zum Schieben der Zentrierbacken 17 sowie zum Drehen der Greifbacken 18 sind in den Figuren 1A und 1B nicht dargestellt. Figur 1A zeigt lediglich beispielhaft eine Führungsnut 13, in der eine Halterung des Schiebers 12 geführt ist.

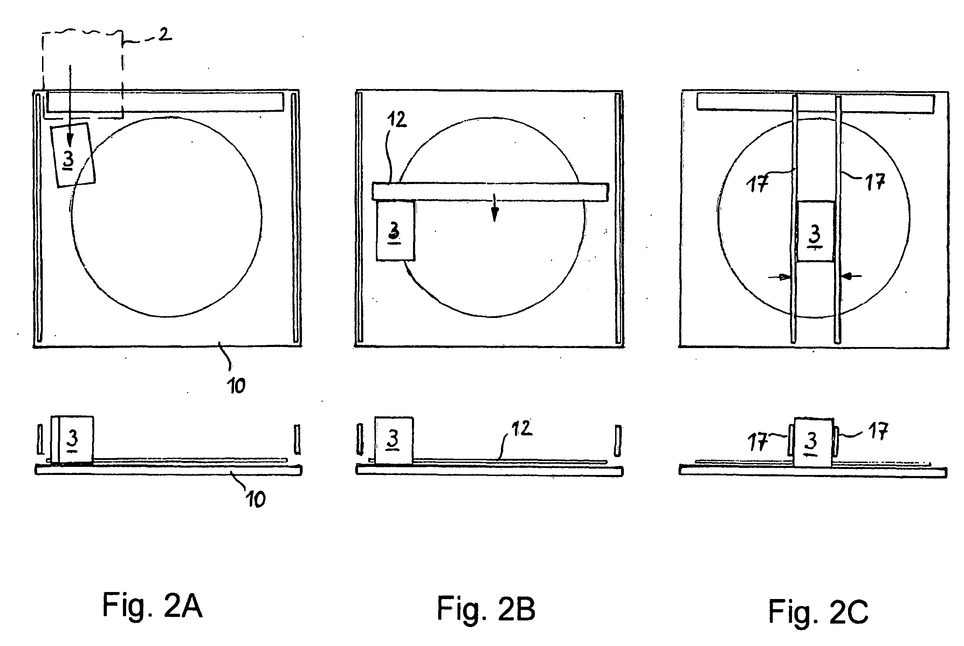

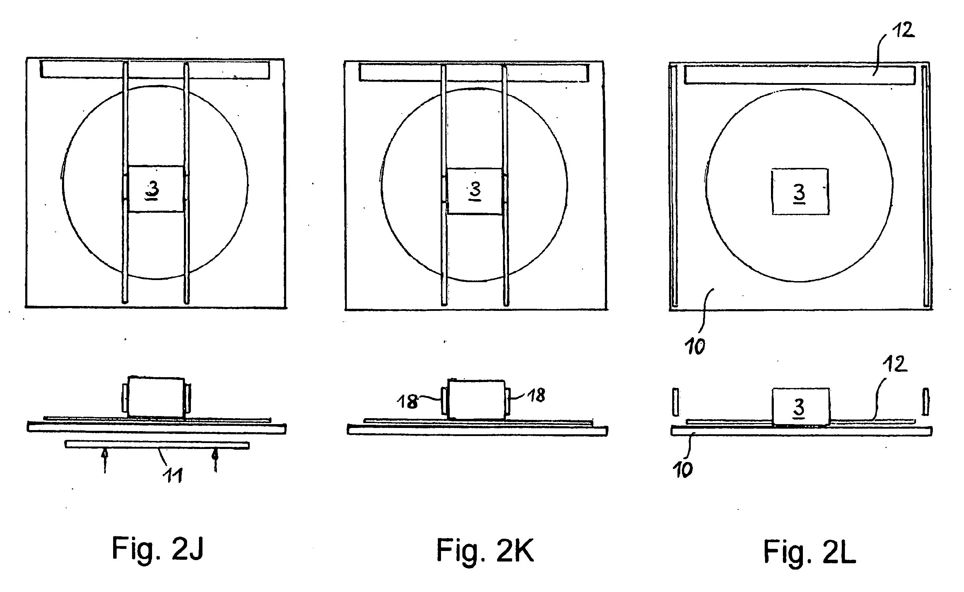

Die Vorrichtung 1 weist ferner eine optische Leseeinrichtung auf, die derart angeordnet ist, daß sie eine Identifikation erfassen kann, die auf wenigstens einer Seitenfläche der Arzneimittelpackung 3 aufgebracht ist. Bei dem in den Figuren 1A und 1B dargestellten Ausführungsbeispiel umfaßt die optische Leseeinrichtung zwei Schwingscanner, nämlich einen Schwingscanner 14 mit einer zur Auflageebene des Auflagetischs 10 senkrechten Scanrichtung und einen Schwingscanner 15 mit einer zur Auflageebene parallelen Scanrichtung. Die beiden Schwingscanner sind zudem aneinander gegenüberliegenden Seiten des Auflagetischs 10 derart angeordnet, daß sie einander gegenüberliegende Seitenflächen einer zwischen den Zentrierbacken 17 zentrierten Arzneimittelpackung abtasten können. Sowohl die beiden Schwingscanner als auch die Antriebseinrichtungen für den Schieber 12, den Drehteller 11 (Drehantrieb und Absenkantrieb) und die Zentrier- und Greifvorrichtung (Zentrierantrieb und Drehantrieb für die Greifbacken) sind mit einer computergestützten Steuereinrichtung gekoppelt. Mit der beschriebenen Anordnung ist es gleichzeitig möglich, die Verfahren des Erfassens einer Identifikation der Arzneimittelpackung, des Vermessens der Arzneimittelpackung und des Positionierens/orientierens der Arzneimittelpackung bei minimalem zeitlichen und apparativen Aufwand auszuführen. Bevor ein typischer Ablauf einer bevorzugten Identifikation, Vermessung und Positionierung einer Arzneimittelpackung anhand der Figuren 2A bis 2L näher beschrieben werden soll, sei darauf hingewiesen, daß im Rahmen des Erfindungsgedankens zahlreiche alternative Ausführungsformen der Vorrichtung 1 denkbar sind.

Bei der in den Figuren 1A und 1B gezeigten Vorrichtung bewegt sich der Schieber 12 in einer Ebene unterhalb der Zentrierbacken 17. Es sind alternative Ausführungsformen denkbar, bei denen sich der Schieber in der Ebene der Zentrierbacken bewegt und dementsprechend aus deren Bewegungsbereich herausgefahren wird, wenn die Zentrierbacken 17 nach innen zusammengefahren werden. Es ist auch denkbar, daß anstelle des Schiebers 12 ein zweites Paar von Zentrierbacken verwendet wird.

Bei der dargestellten bevorzugten Ausführungsform ist die Einrichtung zum Drehen der Packung um eine zur Auflageebene parallele Achse in Form der sich drehenden Greifbacken 18 in die Zentriervorrichtung integriert. Es sind aber auch Ausführungsformen denkbar, bei denen zum Drehen der Arzneimittelpackung separate Greifer verwendet werden. Darüber hinaus kann zum Drehen der Arzneimittelpackung um 90° um eine zur Auflageebene parallele Achse auch eine Kippvorrichtung, die in den Drehteller 11 integriert ist, verwendet werden.

Anstelle der Verwendung von zwei einander gegenüberliegenden, in zwei zueinander senkrechten Ebenen schwingenden Schwingscannern könnte auch ein einziger Schwingscanner verwendet werden, der mit einer Vorrichtung zum Kippen der Schwingebene gekoppelt ist. Die beiden Schwingscanner könnten auch an derselben Seite des Auflagetischs 10 angeordnet sein.

Nicht in den Figuren 1A und 1B dargestellt sind zusätzliche Sensoren, die der Erfassung einer bestimmten Lage der Arzneimittelpackung oder der Vermessung einer zur Auflageebene senkrechten Abmessung dienen. Beispielsweise ist die Steuerung des Schiebers 12 vorzugsweise mit einem Sensor gekoppelt, der das Erreichen einer vorgegebenen Position der von dem Schieber geschobenen Arzneimittelpackung 3 erfaßt, woraufhin der Schieberantrieb angehalten wird. Beispielsweise wird dazu eine oberhalb des Auflagetischs 10 angeordnete Lichtschranke verwendet, welche so angeordnet ist, daß sie von der Vorderkante der von dem Schieber 12 verschobenen Arzneimittelpackung 3 unterbrochen wird, wenn die Arzneimittelpackung die vorgegebene Position der Lichtschranke erreicht. Diese Position ist so gewählt, daß sich die Arzneimittelpackung - unabhängig von deren Lage und Größe in einem mittleren Bereich des Auflagetischs befindet, wenn die Lichtschranke unterbrochen wird. Anstelle einer Lichtschranke sind auch mehrere Lichtschranken oder andere Annäherungs- oder Abstandssensoren denkbar. Zudem ist es denkbar, daß bereits beim Zuführen der Arzneimittelpackung 3 über die Fördereinrichtung 2 deren Ausdehnung in der Richtung des Pfeils 30 ermittelt wird und das ferner der von dem Schieber 12 zurückgelegte Weg erfaßt wird, so daß aus diesen erfaßten Größen der geeignete Ort zum Abschalten des Antriebs des Schiebers 12 berechnet werden kann.

Darüber hinaus kann oberhalb des Auflagetischs 10 ein Sensor angeordnet sein, der die Höhenabmessung der auf dem Auflagetisch 10 zentriert aufliegenden Arzneimittelpackung 3, beispielsweise der in Figur 1A gezeigten Arzneimittelpackung 3B, erfassen kann. Hierzu eignet sich beispielsweise ein Ultraschallsensor.

Im folgenden wird das Verfahren des Identifizierens, des Vermessens und des Positionierens/orientierens einer Arzneimittelpackung anhand der Figuren 2A bis 2L näher beschrieben.

Wie in Figur 2A zu erkennen ist, wurde eine von der Fördereinrichtung 2 herangeführte Arzneimittelpackung 3 in einem Eckenbereich des Auflagetischs 10 abgelegt. Wie dargestellt, brauchen die Außenkanten der Auflagefläche der Arzneimittelpackung 3 nicht zu den Bewegungsrichtungen des Schiebers 12 bzw. der Zentrierbacken 17 ausgerichtet zu sein. Die Arzneimittelpackung 3 liegt mit einer beliebigen ihrer sechs Seitenflächen auf dem Auflagetisch 10 auf. Auf wenigstens einer ihrer sechs Seitenflächen befindet sich eine maschinell lesbare Kennzeichnung, die die Arzneimittelpackung 3 identifiziert, beispielsweise ein Barcode. Die Arzneimittelpackung 3 soll nachfolgend identifiziert, d.h. der Barcode gelesen, vermessen und in einer vorgegebenen Orientierung an eine vorgegebene Position (Übergabeposition) gebracht werden.

Wie in Figur 2B dargestellt ist, wird zunächst der Schieber 12 in eine erste Richtung bewegt, wobei er die Arzneimittelpackung 3 in der ersten Richtung soweit schiebt, bis diese eine etwa mittige Position auf dem Auflagetisch 10 erreicht. Beispielsweise wird der Schieber 12 solange bewegt, bis eine Vorderkante der Arzneimittelpackung 3 eine Lichtschranke unterbricht. Die Lichtschranke kann an einem festen Ort positioniert sein; sie kann aber auch entlang der ersten Richtung verschiebbar angeordnet sein und in Abhängigkeit von einer zuvor während des Transports auf der Fördereinrichtung 2 grob erfaßten Abmessung der Arzneimittelpackung 3 positioniert werden.

Der Schieber wird dann in seine Ausgangsposition zurückgefahren, wie es in Figur 2C zu erkennen ist. Anschließend oder gleichzeitig werden die Zentrierbacken 17 in einer zur ersten Richtung senkrechten zweiten Richtung zusammengefahren, wobei sie die Arzneimittelpackung 3 auf dem Auflagetisch 10 in dieser zweiten Richtung zentrieren.

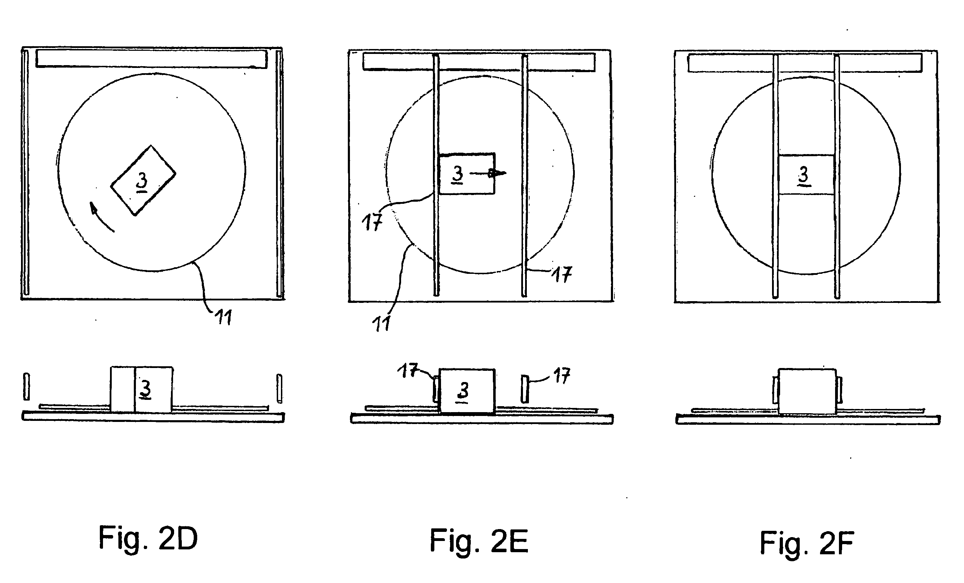

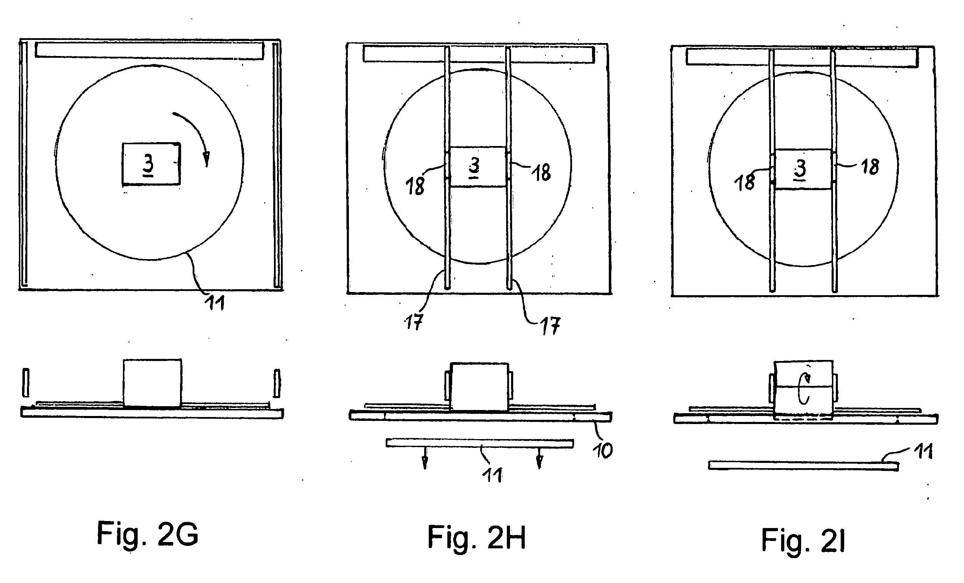

Anschließend werden die Zentrierbacken 17 wieder in ihre Ausgangsposition entlang der zweiten Richtung zurückgefahren. Dann wird der Drehteller 11 des Auflagetischs 10 gedreht, wie es in Figur 2B gezeigt ist. Der Drehteller wird um 90° gedreht. Anschließend werden wiederum die Zentrierbacken 17 in der zweiten Richtung zusammengefahren, so daß nunmehr die Arzneimittelpackung 3 in der Mitte des Drehtellers 11 zentriert wird, wie es in den Figuren 2E und 2F gezeigt ist. Anschließend werden die Zentrierbacken 17 wieder auseinandergefahren. Es ergibt sich schließlich die in Figur 2G dargestellte Anordnung, bei der die Arzneimittelpackung 3 in der Mitte des Drehtellers 11 zentriert frei aufliegt.

Ein Erfassen der auf dem zur Auflageebene des Tisches 10 senkrechten Seitenflächen aufgebrachten Kennzeichnung (Barcode) kann bei dem in Figur 2G dargestellten Zustand beginnen; die Erfassung der Barcodes kann aber auch bereits in der in Figur 2C dargestellten Phase beginnen, sofern die Tiefenschärfe der Scanner ausreicht, um die auf den ihnen jeweils zugewandten Seitenflächen aufgebrachten Barcodes bereits dann zu erkennen, wenn die Arzneimittelpackung 3 noch nicht vollständig zentriert ist. So könnten bereits in der Phase der Figur 2C die in Figur 1A dargestellten Schwingscanner 14 und 15 die gegebenenfalls auf den ihnen zugewandten Seitenflächen der Arzneimittelpackung 3 vorhandenen Barcodes lesen. Wird dabei ein Barcode erfaßt und läßt sich dieser eindeutig identifizieren, so wäre bereits der Schritt des Identifizierens abgeschlossen. Anschließend, nämlich in den in den Figuren 2E und 2F dargestellten Phasen könnten die Schwingscanner 14 und 15 jeweils eine weitere Seitenfläche abtasten, so daß bereits vor Erreichen des in Figur 2G dargestellten vollständig zentrierten Zustands von den Schwingscannern 14 und 15 jeweils zwei Seiten abgetastet worden sind.

Unter der Annahme, daß der auf wenigstens einer der sechs Seitenflächen der quaderförmigen Arzneimittelpackung 3 aufgebrachte Barcode zumindest näherungsweise zu einer Seitenkante der Arzneimittelpackung ausgerichtet ist, ist es mit Hilfe der beiden einander gegenüberliegenden Schwingscanner 14 und 15, die zueinander senkrecht orientierte Abtastrichtungen aufweisen, im worst case denkbar, das fünf Umpositionierbewegungen der Arzneimittelpackung erforderlich werden, bis schließlich die Seitenfläche, auf der der Barcode aufgebracht ist, dem entsprechend orientierten Schwingscanner zugewandt ist,. Beispielsweise kann es sein, daß die Arzneimittelpackung zunächst dreimal um jeweils 90° von dem Drehteller 11 gedreht wird, ohne daß dabei bereits ein Barcode von einem der Schwingscanner erfaßt worden ist, so daß anschließend noch die Oberseite und die Auflagefläche der Arzneimittelpackung 3 jeweils von beiden Schwingscannern abzutasten sein können. Dazu ist die Arzneimittelpackung zumindest einmal um etwa 90° um eine zur Auflageebene parallele Achse zu drehen und anschließend noch einmal um etwa 180° (entweder wieder um eine zur Auflageebene parallele Achse oder um eine zur Auflageebene senkrechte Achse, d.h. mit Hilfe des Drehtellers) zu drehen.

Wenn das Verfahren in der in Figur 2G dargestellten Phase angelangt ist, sind gegebenenfalls von beiden Schwingscannern 14 und 15 bereits zwei Seitenflächen abgetastet, so daß jeweils lediglich zwei weitere Seitenflächen abgetastet werden müssen, bevor sich gegebenenfalls ein Drehen der Arzneimittelpackung um eine zur Auflageebene parallele Achse erforderlich macht. Dieses zweimalige Drehen der Arzneimittelpackung mittels des Auflagetellers derart, daß beide Schwingscanner schließlich sämtliche zur Auflagefläche 10 senkrechten vier Seitenflächen abgetastet haben, wird während der in Figur 2G dargestellten Phase durchgeführt. Dabei wird selbstverständlich das weitere Drehen der Arzneimittelpackung 3 und das weitere Abtasten der Seitenflächen nur dann durchgeführt, wenn nicht bereits zuvor ein Barcode erfaßt worden ist. Am Ende der Phase, die in Figur 2G schematisch dargestellt ist, sind sämtliche zum Auflagetisch 10 senkrechten vier Seitenflächen der Arzneimittelpackung abgetastet. Darüber hinaus sind aufgrund des Zusammenfahrens der Zentrierbacken (vergleiche Figur 2C und Figur 2F) bereits die Dimensionen der Auflagefläche der Arzneimittelpackung erfaßt.

Ein Erfassen der zur Auflagefläche 10 senkrechten Abmessung der Arzneimittelpackung 3 kann bei einer Ausführungsform gleichzeitig mit Hilfe eines Ultraschallsensors ausgeführt werden. In diesem Fall sind nach Abschluß des in Figur 2G dargestellten Schrittes bereits sämtliche drei Abmessungen der Arzneimittelpackung 3 bekannt. Dann kann die Steuereinrichtung ausgehend von diesen drei Abmessungen bestimmen, ob die Arzneimittelpackung zum Herstellen der gewünschten Orientierung gegebenenfalls noch um eine zum Auflagetisch 10 senkrechte Achse und/oder um eine zum Auflagetisch parallele Achse gedreht werden muß.

Sollte sich ein Drehen um eine zur Auflageebene des Auflagetischs 10 parallele Achse erforderlich machen, weil entweder die Arzneimittelpackung 3 noch nicht die gewünschte Orientierung erreicht hat oder weil nach Abschluß der Phase gemäß Figur 2G noch kein Barcode erfaßt worden ist, so schließen sich gegebenenfalls die in den Figuren 2H bis 2L gezeigten Phasen an.

Wie es in Figur 2H gezeigt ist, werden die Greifbacken 18 der Zentrier- und Greifvorrichtung 16 soweit zusammengefahren, daß die Arzneimittelpackung 3 zwischen ihnen eingeklemmt wird. Dann wird der Drehteller 11 nach unten heruntergefahren, so daß die Arzneimittelpackung 3 lediglich von den Greifbacken 18 gehalten wird. Anschließend steuert ein Antrieb die in Figur 1B dargestellten Zahnriemen 21 und somit die Zahnräder 20 derart an, daß die Arzneimittelpackung 3 um eine zur Auflageebene des Auflagetischs 10 parallele Achse gedreht wird. Dies ist in Figur 2I dargestellt. Die Arzneimittelpackung wird vorzugsweise um etwa 90° gedreht, so daß diejenigen Seitenflächen der Arzneimittelpackung 3, die zuvor parallel zur Auflageebene des Auflagetischs 10 orientiert waren, nunmehr den Schwingscannern 14 und 15 zugewandte Seitenflächen bilden. Unmittelbar am Ende dieser 90°-Drehbewegung können die Schwingscanner gegebenenfalls auf diesen Flächen angeordnete Barcodes erfassen. Sofern auch nach der 90°-Drehung noch kein Barcode erfaßt werden kann, weist die Steuereinrichtung der Vorrichtung 1 die Antriebe zum Drehen der Greifbacken 18 an, die Arzneimittelpackung um 180° weiter oder zurück zu drehen, so daß dann auch die jeweils letzten Seitenflächen von den Scannern 14 und 15 abgetastet werden können. Alternativ können der Auflageteller wieder nach oben gefahren und die Greifbacken 18 auseinandergefahren werden, so daß die Arzneimittelpackung in der nach der 90°-Drehung erreichten Orientierung auf dem Auflageteller zurückfällt, wie es in den Figuren 2J bis 2L dargestellt ist. Hierbei werden die Greif- und Zentrierbacken 18 und 17 wieder in die Ausgangsposition zurückgefahren, wie es in Figur 2L gezeigt ist. Anschließend kann der Drehteller veranlaßt werden, eine 180°-Drehung auszuführen, um das Abtasten der verbleibenden Seitenflächen durch die Schwingscanner 14 und 15 zu ermöglichen.

Sofern keine Sensoreinrichtung zum Messen der Abmessung der Arzneimittelpackung 3 in der zur Auflageebene des Auflagetischs 10 senkrechten Richtung vorhanden ist, schließt sich an den Schritt, der in Figur 2L gezeigt ist, eine 90°-Drehung der Arzneimittelpackung durch den Drehteller 11 an, woraufhin die Zentrierbacken 17 erneut auf die Arzneimittelpackung zusammengefahren werden, um die verbleibende dritte Abmessung zu erfassen. Nach diesen Schritten bzw. nach der in Figur 2L dargestellten Phase sollte sowohl die Identifikation erfaßt als auch sämtliche Abmessung der Arzneimittelpackung bekannt sein. Wenn dies nicht der Fall ist, so ist ein Fehler aufgetreten. Bei Feststellung eines Fehlers könnten die Schritte des Scannens der Identifikation und des Vermessens wiederholt werden. Alternativ kann die Arzneimittelpackung aussortiert werden.

Nach Abschluß der in Figur 2L dargestellten Phase befindet sich die Arzneimittelpackung möglicherweise noch nicht in derjenigen Position und Orientierung, an bzw. in der sie von dem Bediengerät aufgenommen werden soll. Gegebenenfalls sind noch weitere Drehbewegungen mit Hilfe des Drehtellers 11 und/oder der Greifbacken 18 erforderlich. Sofern die Arzneimittelpackung 3 von dem Greifer des Bediengeräts nicht in der zentrierten Position sondern am Rande der Auflagefläche 10 aufgenommen werden soll, wird der Schieber 12 nach Abschluß des Identifizierens, Vermessens und orientierens der Arzneimittelpackung 3 veranlaßt, diese gegebenenfalls an den Rand der Auflagefläche 10 zu verschieben, wo sie von dem Greifer des Bediengeräts ergriffen werden kann.

Mit Hilfe der beschriebenen Vorrichtung können sowohl das Verfahren des Identifizierens als auch die Verfahren des Vermessens und des Orientierens/Positionierens der Arzneimittelpackung so von der Steuereinrichtung gesteuert werden, daß sich eine minimale Dauer und/oder eine maximale Zuverlässigkeit ergibt.

Bezüglich des Verfahrens zum automatisierten Erfassen einer auf der Arzneimittelpackung aufgebrachten Barcode-Identifikation ergibt sich folgender Ablauf, der die kürzestmögliche Zeitdauer gewährleistet:
a) zunächst wird die Arzneimittelpackung, wie es in den Figuren 2A bis 2C dargestellt ist, auf dem Auflageteller zentriert, wobei bereits die den Scannern zugewandten Seitenflächen abgetastet werden;
b) anschließend wird der Drehteller um 90° gedreht und die Arzneimittelpackung erneut zentriert, wie es in den Figuren 2D bis 2F dargestellt ist, wobei die Scanner 14 und 15 zwei weitere Seitenflächen abtasten;
c) anschließend wird der Drehteller 11 gegebenenfalls zwei weitere Male um 90° gedreht, wobei die Scanner jeweils zwei weitere Seitenflächen abtasten, wie es in Figur 2G dargestellt ist;
d) schließlich wird die Arzneimittelpackung von den Greifbacken ergriffen und einmal um 90° und gegebenenfalls anschließend um 180° gedreht, wie es in den Figuren 2H bis 2I dargestellt ist.

Anschließend sind von jedem der beiden Scanner 14 und 15 sämtliche sechs Seitenflächen der Arzneimittelpackung 3 abgetastet. Anstelle des Schritts d) ist es alternativ möglich, die Araneimittelpackung nach Drehung um 90° durch die Greifbacken 18, wie es in den Figuren 2H bis 2I dargestellt ist, wieder auf dem Auflageteller 11 abzulegen (Figuren 2J bis 2L) und anschließend den Auflageteller um 180° zu drehen.

Es sei darauf hingewiesen, daß zum Zwecke des Identifizierens der jeweils nächste Positionierschritt nur dann ausgeführt wird, wenn noch keine Identifikation erfaßt worden ist. Allerdings sind auch nach Erfassen einer Identifikation weitere Umpositionierschritte auszuführen, sofern die Arzneimittelpackung noch nicht vollständig vermessen oder noch nicht in der gewünschten Orientierung ist.

## Patentansprüche

1. Verfahren zum automatisierten Erfassen einer auf einem quaderförmigen Stückgut (3), insbesondere einer Arzneimittelpackung, aufgebrachten optisch erfaßbaren Identifikation, wobei:
a) jeweils ein einzelnes Stückgut von einer Fördervorrichtung in eine Anfangsposition auf einer Auflageebene einer drehbaren Auflage (11) befördert wird,
b) eine optische Leseeinrichtung (14, 15), die derart angeordnet ist, daß sie eine Identifikation erfassen kann, die auf wenigstens einer der Leseeinrichtung zugewandten, zur Auflageebene senkrechten Seitenfläche des auf der Auflageebene aufliegenden Stückguts aufgebracht ist, zum Abtasten wenigstens einer ihr zugewandten Seitenfläche veranlaßt wird,
c) festgestellt wird, ob bei dem Abtasten eine Identifikation erfaßt worden ist,
d) in dem Fall, daß von der optischen Leseeinrichtung (14, 15) bei dem Abtasten keine Identifikation erfaßt worden ist, die Auflage derart gedreht wird, daß wenigstens eine nächste senkrecht angeordnete Seitenfläche der optischen Leseeinrichtung zugewandt wird, und die Leseeinrichtung zum Abtasten der wenigstens einen nächsten Seitenfläche veranlaßt wird, und
e) die Schritte c) und d) solange wiederholt werden, bis eine Identifikation erfaßt worden ist oder sämtliche vier Seitenflächen von der optischen Leseeinrichtung abgetastet worden sind,
f) wobei dann, wenn nach Abschluß der Schritte c) bis e) noch keine Identifikation erfaßt worden ist, das auf der Auflage aufliegende Stückgut von einer Greifeinrichtung (16 - 22) ergriffen und um etwa 90° um eine zur Auflageebene parallele Achse gedreht und derart orientiert wird, daß die optische Leseeinrichtung eine auf einer zuvor noch nicht abgetasteten Fläche des Stückguts aufgebrachte Identifikation erfassen kann, und die Schritte b) und c) wiederholt werden, und
g) wobei dann, wenn im Schritt f) festgestellt wird, daß keine Identifikation erfaßt worden ist, daß Stückgut um etwa 180° gedreht wird, so daß die optische Leseeinrichtung eine auf der verbleibenden Fläche aufgebrachte Identifikation erfassen kann, und die Schritte b) und c) wiederholt werden.

2. Verfahren nach Anspruch 1, **dadurch gekennzeichnet, daß** das Stückgut im Schritt f) nach der Drehung um etwa 90° wieder auf der Ablage abgelegt wird und im Schritt g) die Ablage um etwa 180° gedreht wird.

3. Verfahren nach Anspruch 2, **dadurch gekennzeichnet, daß** nach dem Ergreifen des Stückguts im Schritt f) die Auflage nach unten abgesenkt, danach das Stückgut um 90° gedreht und dann die Auflage wieder angehoben wird.

4. Verfahren nach Anspruch 1, **dadurch gekennzeichnet, daß** das Stückgut im Schritt f) und im Schritt g) von der Greifeinrichtung gedreht wird.

5. Verfahren nach einem der Ansprüche 1 bis 4, **dadurch gekennzeichnet, daß** die Auflage im Schritt d) jeweils um 90° gedreht wird.

6. Verfahren nach einem der Ansprüche 1 bis 5, **dadurch gekennzeichnet, daß** die aufgebrachte Identifikation eine von einem Scanner, der in einer vorgegebenen Abtastrichtung abtastet, erfaßbare Identifikation ist.

7. Verfahren nach Anspruch 6, **dadurch gekennzeichnet, daß** die Identifikation eine auf dem Stückgut aufgebrachte Strichcode-Identifikation ist, wobei der Strichcode im wesentlichen parallel zu einer Kante des Stückguts ausgerichtet ist.

8. Verfahren nach Anspruch 6 oder 7, **dadurch gekennzeichnet, daß** in den Schritten b) und d) zur Erfassung der Identifikation eine Seitenfläche des Stückguts durch einen Scannerkopf in einer ersten Scanrichtung und in einer zweiten Scanrichtung abgetastet wird.

9. Verfahren nach Anspruch 8, **dadurch gekennzeichnet, daß** die Seitenfläche des Stückguts zunächst in der ersten Scanrichtung abgetastet und der Scannerkopf vor dem Abtasten in der zweiten Scanrichtung um 90° gedreht wird.

10. verfahren nach Anspruch 6 oder 7, **dadurch gekennzeichnet, daß** in den Schritten b) und d) zur Erfassung der Identifikation jeweils zwei senkrecht zur Auflageebene orientierte Seitenflächen des Stückguts von jeweils einem Scannerkopf abgetastet werden, wobei ein erster Scannerkopf eine erste Seitenfläche in einer ersten Richtung abtastet und ein zweiter Scannerkopf eine zweite Seitenfläche in einer zur ersten Richtung senkrechten zweiten Richtung abtastet.

11. Verfahren nach Anspruch 10, **dadurch gekennzeichnet, daß** die beiden Scannerköpfe so angeordnet sind, daß sie einander gegenüberliegende Seitenflächen abtasten.

12. Verfahren nach einem der Ansprüche 1 bis 11, **dadurch gekennzeichnet, daß** das einzelne Stückgut im Schritt a) auf die Auflage gefördert und in eine mittige Anfangsposition verschoben wird.

13. Vorrichtung zum automatisierten Erfassen einer auf einem quaderförmigen Stückgut (3), insbesondere auf einer Arzneimittelpackung, aufgebrachten optisch erfaßbaren Identifikation, mit:
einem drehbaren Auflageteller (11) mit einer Auflageebene zur Aufnahme des Stückguts (3) während des Erfassens, wobei der Auflageteller mit einem Drehantrieb gekoppelt ist,
einer Fördervorrichtung (12, 16) zum Fördern eines einzelnen Stückguts in eine Anfangsposition auf dem drehbaren Auflageteller (11),
einer optischen Leseeinrichtung (14, 15), die derart angeordnet ist, daß sie eine Identifikation erfassen kann, die auf wenigstens einer der Leseeinrichtung zugewandten, zur Auflageebene senkrechten Seitenfläche eines auf der Auflageebene aufliegenden Stückguts aufgebracht ist, und
einer mit dem Drehantrieb und der Fördervorrichtung gekoppelten Steuereinrichtung,
**dadurch gekennzeichnet,**
**daß** über dem Auflageteller eine Greifeinrichtung (18 -22) angeordnet ist, die das Stückgut ergreifen und um eine zur Auflageebene parallele Achse drehen kann, und
**daß** die Steuereinrichtung mit der optischen Leseeinrichtung und der Greifeinrichtung gekoppelt und so ausgebildet ist, daß nach dem Fördern des Stückguts in die Anfangsposition die optische Leseeinrichtung aktiviert und der Auflageteller solange gedreht wird, bis entweder die optische Leseeinrichtung eine Identifikation erfaßt hat oder bis der Auflageteller soweit gedreht worden ist, daß sämtliche zur Auflageebene senkrechten Seitenflächen des Stückguts von der optischen Le= seeinrichtung abgetastet worden sind, ohne eine Identifikation zu erfassen, wobei in dem zuletzt genannten Fall die Steuereinrichtung die Greifeinrichtung veranlaßt, das Stückgut zu greifen und um etwa 90° um eine zur Auflageebene parallele Achse zu drehen und derart zu orientieren, daß die optische Leseeinrichtung eine auf einer zuvor noch nicht abgetasteten Fläche des Stückguts aufgebrachte Identifikation erfassen kann.

14. Vorrichtung nach Anspruch 13, **dadurch gekennzeichnet, daß** der Auflageteller eine zur Drehachse konzentrische kreisförmige Begrenzung aufweist und in eine entsprechende Ausnehmung einer den Auflageteller umgebenden Auflagefläche aufgenommen ist.

15. Vorrichtung nach Anspruch 14, **dadurch gekennzeichnet, daß** der drehbare Auflageteller (11) nach unten unter die Auflagefläche (10) absenkbar ist.

16. Vorrichtung nach einem der Ansprüche 13 bis 15, **dadurch gekennzeichnet, daß** die Fördervorrichtung zwei in geringem Abstand über den Auflageteller (11) in dessen radialer Richtung geführte parallele Schiebebacken (17) aufweist, deren Breite den Durchmesser des Drehtellers übersteigt und die derart von außen zur Mitte des Auflagetellers zusammenfahrbar sind, daß ein auf dem Auflageteller aufliegendes Stückgut in der Bewegungsrichtung der Schiebebacken auf dem Auflageteller zentriert wird.

17. Vorrichtung nach Anspruch 16, **dadurch gekennzeichnet, daß** die Fördervorrichtung ferner einen rechtwinklig zu den parallelen Schiebebacken angeordneten Schieber (12) aufweist, der über den Auflageteller hinweg von außen radial zur Mitte des Auflagetellers bewegt werden kann und der sich über die Breite des Auflagetellers erstreckt.

18. Vorrichtung nach Anspruch 17, **dadurch gekennzeichnet, daß** die Greifeinrichtung zwei in einer zur Auflageebene senkrechten Ebene drehbare Greifbacken (18) aufweist, die jeweils in der Mitte der parallelen Schiebebacken (17) angeordnet und mit diesen zusammenfahrbar sind.

19. Vorrichtung nach einem der Ansprüche 13 bis 18, **dadurch gekennzeichnet, daß** die optische Leseeinrichtung einen auf dem Stückgut aufgebrachten Strichcode erfassen kann.

20. Vorrichtung nach Anspruch 19, **dadurch gekennzeichnet, daß** die optische Leseeinrichtung einen Scannerkopf mit einer vorgegebenen Scanrichtung umfaßt, bei dem die Scanrichtung um 90° gekippt werden kann.

21. Vorrichtung nach Anspruch 19, **dadurch gekennzeichnet, daß** die optische Leseeinrichtung einen ersten Scannerkopf (15) mit einer zur Auflageebene parallelen Scanrichtung und einen zweiten Scannerkopf (14) mit einer zur Auflageebene senkrechten Scanrichtung umfaßt.

22. Vorrichtung nach Anspruch 21, **dadurch gekennzeichnet, daß** die beiden Scannerköpfe (14, 15) so angeordnet sind, daß sie einander gegenüberliegende Seitenflächen des Stückguts abtasten.

## Claims

1. Method of automated detection of an optically detectable identification which is applied to a cuboid package (3), in particular a medicament pack, wherein:
a) in each case an individual package is conveyed by a conveying device into a starting position on a support plane of a rotatable support (11),
b) an optical reading device (14, 15) is disposed in such a way that it can detect an identification which is applied to at least one side face, which faces the reading device and is perpendicular to the support plane, of the package resting on the support plane and the optical reading device is made to scan at least one side face which faces it,
c) it is established whether an identification has been detected during the scanning,
d) in the event that no identification has been detected by the optical reading device (14, 15) during the scanning the support is rotated in such a way that at least one nearest side face which is disposed perpendicularly faces the optical reading device, and the reading device is caused to scan the at least one nearest side face, and
e) the steps c) and d) are repeated until an identification has been detected or all four side faces have been scanned by the optical reading device,
f) wherein when after termination of the steps c) to e) still no identification has been detected the package resting on the support is gripped by a gripping device (16 to 22) and rotated by approximately 90° about an axis parallel to the support plane and is oriented in such a way that the optical reading device can detect an identification applied to a face of the package which has not as yet been scanned, and the steps b)and c) are repeated, and
g) wherein when it is established in step f) that no identification has been detected the package is rotated by approximately 180°, so that the optical reading device can detect an identification applied to the remaining face, and the steps b) and c) are repeated.

2. Method as claimed in Claim 1, **characterised in that** in step f) the package is set down again on the support after the rotation by approximately 90° and in step g) the support is rotated by approximately 180°.

3. Method as claimed in Claim 2, **characterised in that** after the gripping of the package in step f) the support is lowered downwards, and thereafter the package is rotated by 90° and then the support is raised again.

4. Method as claimed in Claim 1, **characterised in that** the package is rotated by the gripping device in step f) and in step g).

5. Method as claimed in any one of Claims 1 to 4, **characterised in that** the support is rotated in each case by 90° in step d).

6. Method as claimed in any one of Claims 1 to 5, **characterised in that** the applied identification is an identification which can be detected by a scanner which scans in a predetermined scanning direction.

7. Method as claimed in Claim 6, **characterised in that** the identification is a barcode identification applied to the package, wherein the barcode is oriented substantially parallel to an edge of the package.

8. Method as claimed in Claim 6 or 7, **characterised in that** in steps b) and d) for detection of the identification a side face of the package is scanned by a scanner head in a first scan direction and in a second scan direction.

9. Method as claimed in Claim 8, **characterised in that** the side face of the package is first of all rotated in the first scan direction and before the scanning the scanner head is rotated by 90° in the second scan direction.

10. Method as claimed in Claim 6 or 7, **characterised in that** in steps b) and d) for detection of the identification in each case to side faces of the package which are oriented perpendicular to the support plane are scanned in each case by a scanner head, wherein a first scanner head scans a first side face in a first direction and a second scanner head scans a second side face in a second direction perpendicular to the first direction.

11. Method as claimed in Claim 10, **characterised in that** the two scanner heads are disposed so that they scan side faces which lie opposite one another.

12. Method as claimed in any one of Claims 1 to 11, **characterised in that** in step a) the individual package is conveyed onto the support and is displaced into a central starting position.

13. Apparatus for automated detection of an optically detectable identification which is applied to a cuboid package (3), in particular a medicament pack, with:
- a rotatable support plate (11) with a support plane to receive the package (3) during the detection, wherein the support plate is coupled to a rotary drive,
- a conveying device (12, 16) for conveying an individual package into a starting position on the rotatable support plate (11),
- an optical reading device (14, 15) which is disposed in such a way that it can detect an identification which is applied to at least one side face, which faces the reading device and is perpendicular to the support plane, of the package resting on the support plane, and
- a control device coupled o the rotary drive and conveying device,
**characterised in that**
- above the support plate there is disposed a gripping device (18 to 22) which can grip the package and can rotate about an axis parallel to the support plane, and that
- the control device is coupled to the optical reading device and the gripping device and is constructed in such a way that after the conveying of the package into the starting position the optical reading device is activated and the support plate is rotated either until the optical reading device has detected an identification or until the support plate has been rotated so far that all the side faces of the package which are perpendicular to the support plane have been scanned by the optical reading device without an identification being detected, wherein in the last-mentioned case the control device causes the gripping device to grip the package and to rotate it by approximately 90° about an axis parallel to the support plate and to orient it in such a way that the optical reading device can detect an identification application to a face of the package which has not yet previously been scanned.

14. Apparatus as claimed in Claim 13, **characterised in that** the support plate has a circular boundary concentric with the axis of rotation and is accommodated in a corresponding recess in a support surface surrounding the support plate.

15. Apparatus as claimed in Claim 14, **characterised in that** the rotatable support plate (11) can be lowered downwards below the support surface (10).

16. Apparatus as claimed in any one of Claims 13 to 15, **characterised in that** the conveying device has two parallel sliding jaws (17) which are guided a small distance above the support plate (11) in the radial direction of the latter, wherein the width of the sliding jaws exceeds the diameter of the turntable and the sliding jaws can be brought together towards the centre of the support plate from the exterior in such a way that a package resting on the support plate is centred on the support plate in the direction of movement of the sliding jaws.

17. Apparatus as claimed in Claim 16, **characterised in that** the conveying device also has a slide (12) which is disposed at right angles to the parallel sliding jaws, can be moved over the support plate from the exterior radially towards the centre of the support plate and extends over the width of the support plate.

18. Apparatus as claimed in Claim 17, **characterised in that** the gripping device has two gripping jaws (18) which are rotatable in a plane perpendicular to the support plane and are each disposed in the centre of the parallel sliding jaws (17) and can be moved together with the latter.

19. Apparatus as claimed in any one of Claims 13 to 18, **characterised in that** the optical reading device can detect a barcode applied to the package.

20. Apparatus as claimed in Claim 19, **characterised in that** the optical reading device comprises a scanner head with a predetermined scanning direction, wherein the scanning direction can be tilted by 90°.

21. Apparatus as claimed in Claim 19, **characterised in that** the optical reading head comprises a first scanner head (15) with a scanning direction parallel to the support plane and a second scanner head (14) with a scanning direction perpendicular to the support plane.

22. Apparatus as claimed in Claim 21, **characterised in that** the two scanner heads (14, 15) are disposed so that they scan side faces of the package which lie opposite one another.

## Revendications

1. Procédé d'acquisition automatique d'une identification saisissable optiquement appliquée à un article parallélépipédique (3), en particulier un emballage de produit pharmaceutique, dans lequel :
a) respectivement un article individuel est acheminé par un dispositif de transport dans une position de départ sur un plan d'appui d'un support rotatif (11),
b) on fait lire à un dispositif de lecture optique (14, 15), qui est agencé de manière à pouvoir saisir une identification appliquée à au moins une surface latérale, tournée vers le dispositif de lecture et perpendiculaire au plan d'appui, de l'article reposant sur ce plan d'appui, au moins une surface latérale tournée vers lui,
c) on détermine si, lors de la lecture, une identification a été acquise,
d) dans le cas où aucune identification n'a été acquise par le dispositif de lecture optique (14, 15) lors de la lecture, le support est soumis à une rotation de sorte qu'au moins une surface latérale suivante disposée perpendiculairement soit tournée vers le dispositif de lecture optique, et on fait lire au dispositif de lecture la au moins une surface latérale suivante, et
e) les étapes c) et d) sont répétées jusqu'à ce qu'une identification ait été acquise ou que les quatre surfaces latérales aient toutes été lues par le dispositif de lecture optique,
f) si, en l'occurrence, après les étapes c) à e), aucune identification n'a encore été acquise, l'article reposant sur le support est saisi par un dispositif de préhension (16 à 22) et soumis à une rotation d'environ 90 ° autour d'un axe parallèle au plan d'appui et orienté de sorte que le dispositif de lecture optique puisse acquérir une identification appliquée à une surface de l'article, qui n'a pas encore été lue précédemment, et les étapes b) et c) sont répétées, et
g) si, en l'occurrence, on constate à l'étape f) qu'aucune identification n'a été acquise, l'article est soumis à une rotation d'environ 180 ° de sorte que le dispositif de lecture optique puisse acquérir une identification appliquée à la surface restante, et les étapes b) et c) sont répétées.

2. Procédé selon la revendication 1, **caractérisé en ce que** l'article est redéposé sur le support à l'étape f) après la rotation d'environ 90 ° et le support est soumis à une rotation d'environ 180° à l'étape g).

3. Procédé selon la revendication 2, **caractérisé en ce que**, après la saisie de l'article à l'étape f), le support est abaissé, puis l'article est soumis à une rotation de 90 ° et le support est ensuite de nouveau relevé.

4. Procédé selon la revendication 1, **caractérisé en ce que** l'article est soumis à une rotation aux étapes f) et g) par le dispositif de préhension.

5. Procédé selon l'une quelconque des revendications 1 à 4, **caractérisé en ce que** le support est soumis respectivement à une rotation de 90° à l'étape d).

6. Procédé selon l'une quelconque des revendications 1 à 5, **caractérisé en ce que** l'identification appliquée est une identification saisissable par un scanner, qui lit dans une direction de lecture prédéterminée.

7. Procédé selon la revendication 6, **caractérisé en ce que** l'identification est une identification à code à barres appliquée à l'article, le code à barres étant orienté sensiblement en parallèle avec une arête de l'article.

8. Procédé selon la revendication 6 ou 7, **caractérisé en ce qu'**aux étapes b) et d) visant à acquérir l'identification, une surface latérale de l'article est lue par une tête de scanner dans une première direction de balayage et dans une seconde direction de balayage.

9. Procédé selon la revendication 8, **caractérisé en ce que** la surface latérale de l'article est d'abord lue dans la première direction de balayage et la tête de scanner est soumise à une rotation de 90 ° avant de procéder à la lecture dans la seconde direction de balayage.

10. Procédé selon la revendication 6 ou 7, **caractérisé en ce qu'**aux étapes b) et d) visant à acquérir l'identification, respectivement deux surfaces latérales de l'article orientées perpendiculairement au plan d'appui sont lues par respectivement une tête de scanner, une première tête de scanner lisant une première surface latérale dans une première direction et une seconde tête de scanner lisant une deuxième surface latérale dans une seconde direction perpendiculaire à la première.

11. Procédé selon la revendication 10, **caractérisé en ce que** les deux têtes de scanner sont agencées de manière à lire des surfaces latérales mutuellement opposées.

12. Procédé selon l'une quelconque des revendications 1 à 11, **caractérisé en ce que** l'article individuel est acheminé à l'étape a) sur le support et déplacé en position de départ centrale.

13. Dispositif d'acquisition automatique d'une identification saisissable optiquement appliquée à un article parallélépipédique (3), en particulier à un emballage de produit pharmaceutique, comprenant :
un plateau de support rotatif (11) avec un plan d'appui pour recevoir l'article (3) pendant l'acquisition, le plateau de support étant couplé à un entraînement rotatif,
un dispositif de transport (12, 16) pour acheminer un article individuel dans une position de départ sur le plateau de support rotatif (11),
un dispositif de lecture optique (14, 15), qui est agencé de manière à pouvoir acquérir une identification, qui est appliquée à au moins une surface latérale, tournée vers le dispositif de lecture et perpendiculaire au plan d'appui, d'un article reposant sur le plan d'appui, et
un dispositif de commande couplé à l'entraînement rotatif et au dispositif de transport,
**caractérisé en ce que**
un dispositif de préhension (18 à 22) est disposé sur le plateau de support et peut saisir l'article et le faire tourner autour d'un axe parallèle au plan d'appui, et
le dispositif de commande est couplé au dispositif de lecture optique et au dispositif de préhension et configuré de manière à activer le dispositif de lecture optique après le transport du colis dans la position de départ et de manière à faire tourner le plateau de support jusqu'à ce que le dispositif de lecture optique ait acquis une identification ou que le plateau de support ait été soumis à une rotation suffisante pour que toutes les surfaces latérales du colis perpendiculaires au plan d'appui aient été lues par le dispositif de lecture optique sans acquérir une identification, dans lequel, dans le dernier cas cité, le dispositif de commande contraint le dispositif de préhension à saisir l'article, à le faire tourner d'environ 90 ° autour d'un axe parallèle au plan d'appui et à l'orienter de sorte que le dispositif de lecture optique puisse acquérir une identification appliquée à une surface de l'article qui n'a pas encore été lue auparavant.

14. Dispositif selon la revendication 13, **caractérisé en ce que** le plateau de support présente une délimitation circulaire concentrique par rapport à l'axe de rotation et est logé dans un évidement correspondant d'une surface d'appui qui l'entoure.

15. Dispositif selon la revendication 14, **caractérisé en ce que** le plateau de support rotatif (11) peut être abaissé en dessous de la surface d'appui (10).

16. Dispositif selon l'une quelconque des revendications 13 à 15, **caractérisé en ce que** le dispositif de transport présente deux mors coulissants parallèles (17) guidés dans leur direction radiale, à faible distance au-dessus du plateau de support (11), mors dont la largeur est supérieure au diamètre du plateau tournant et qui peuvent être refermées de l'extérieur vers le centre du plateau de support de manière à centrer un article reposant sur le plateau de support dans le sens de déplacement des mors coulissants.

17. Dispositif selon la revendication 16, **caractérisé en ce que** le dispositif de transport présente en outre un coulisseau (12) perpendiculaire aux mors coulissants parallèles, qui peut être déplacé pardessus le plateau de support, radialement de l'extérieur vers le centre du plateau de support et qui s'étend sur la largeur du plateau de support.

18. Dispositif selon la revendication 17, **caractérisé en ce que** le dispositif de préhension présente deux mors de préhension (18) pivotant dans un plan perpendiculaire au plan d'appui, qui sont agencés respectivement au centre des mors coulissants parallèles (17) et peuvent être refermés avec ceux-ci.

19. Dispositif selon l'une quelconque des revendications 13 à 18, **caractérisé en ce que** le dispositif de lecture optique peut acquérir un code à barres appliqué à l'article.

20. Dispositif selon la revendication 19, **caractérisé en ce que** le dispositif de lecture optique comprend une tête de scanner ayant une direction de balayage prédéterminée, dans laquelle la direction de balayage peut être basculée d'un angle de 90 °.

21. Dispositif selon la revendication 19, **caractérisé en ce que** le dispositif de lecture optique comprend une première tête de scanner (15) avec une direction de balayage parallèle au plan d'appui et une seconde tête de scanner (14) avec une direction de balayage perpendiculaire au plan d'appui.

22. Dispositif selon la revendication 21, **caractérisé en ce que** les deux têtes de scanner (14, 15) sont agencées de manière à lire des surfaces latérales mutuellement opposées de l'article.
